# EUROPÄISCHE PATENTSCHRIFT

(11) **EP 4 288 266 B1**
(45) Veröffentlichungstag und Bekanntmachung des Hinweises auf die Patenterteilung: **28.01.2026**
(21) Anmeldenummer: 22709209.5
(22) Anmeldetag: 03.02.2022
(51) Int. Cl.: B29C 45/27, B60R 13/00, B29C 51/10, B29C 51/12, B29C 51/30, B60Q 1/26, F21S 43/241, F21S 43/245

(54) **EXTERNES KAROSSERIETEIL MIT DESIGNSTRUKTUREN UND VERFAHREN ZUR HERSTELLUNG VON ANLAGETEILEN**
EXTERNAL BODY PART WITH DESIGN STRUCTURES AND METHODS OF FABRICATION OF INSERTS
PIÈCE DE CARROSSERIE EXTERNE AVEC DES MOTIFS ET MÉTHODE DE FABRICATION D'INSERTS

(30) Priorität: 08.02.2021 DE 102021102820
(43) Veröffentlichungstag der Anmeldung: 13.12.2023
(73) Patentinhaber: Montaplast GmbH, 51590 Morsbach (DE)
(72) Erfinder: PAUS, Daniel, 50735 Köln (DE); FILIP, Norbert, 51674 Wiehl (DE); DÖRR, Hans Uwe, 51674 Wiehl (DE)
(74) Vertreter: Bobzien, Hans Christoph
(86) Internationale Anmeldenummer: PCT/EP2022/052581
(87) Internationale Veröffentlichungsnummer: WO 2022/167523

(56) Entgegenhaltungen:
- DE-A1- 102017 214 943
- JP-A- 2006 160 136
- US-A1- 2007 278 770

## Beschreibung

Die Erfindung betrifft ein externes Karosserieteil, ausgebildet zum Einbau in eine Aufnahme an einem Kraftfahrzeug oder zum direkten Verbinden mit dem Kraftfahrzeug.

Dieses Karosserieteil umfasst ein flächiges Flächenteil, das eine in Einbaulage nach außen gerichtete Außenfläche, eine dieser gegenüberliegende Innenfläche sowie einen dieses begrenzenden Flächenrand umfasst. Ferner ist an diesem mindestens eine Designstruktur an der Außenfläche des Karosserieteils vorgesehen. Das Flächenteil ist als Kunststoffspritzgussteil in einer ersten Farbe gestaltet oder ausgebildet.

### Stand der Technik

Damit betrifft die Erfindung ein externes Karosserieteil, ausgebildet zum Einbau in einer Aufnahme an einem Kraftfahrzeug oder auch zum direkten Verbinden mit einem Kraftfahrzeug. Das externe Karosserieteil umfasst ein flächiges Flächenteil, welches eine in Einbaulage nach außen, also zur Außenseite des Kraftfahrzeugs gerichtete Außenfläche und eine dieser gegenüberliegende Innenfläche sowie einen das Flächenteil an einem äußeren Umfangsrand umfänglich begrenzenden Flächenrand umfasst.

Ferner ist mindestens eine Designstruktur vorgesehen, welche eine dreidimensionale Struktur darstellt, die im Verhältnis zur Außenfläche des Flächenteils hervorsteht, also aus der Fläche des Flächenteils absteht, also in Einbaulage von der Fläche des Flächenteils nach vorne absteht. Die Designstruktur kann z.B. als ein Emblem, ein Logo oder dergleichen ausgebildet sein, welches auf dem Flächenteil angeordnet oder in diesem eingelassen ist. Das Flächenteil ist als Kunststoffspritzgussteil ausgebildet und weist eine Lackierung in der gewünschten Farbe des Karosserieteils auf, was auch eine Lacklackierung oder eine andere Lackierung sein kann.

Das Karosserieteil ist folglich direkt mit dem Kraftfahrzeug verbunden, also mit diesem verschraubt, verclipst oder aber in einen Halter oder eine andere Aufnahme eingesetzt, und bildet somit ein Außenteil, auch bezeichnet als Exterieur-Teil, des Kraftfahrzeugs, insbesondere eines Pkws.

Bei der Entwicklung der Erfindung ist insbesondere eine Blende von Interesse, im Speziellen eine Kühlerschutzblende, welche zum Zeitpunkt der Erfindung im Rahmen der Umstellung von Verbrennungsmotoren auf Elektroantriebe das Schließen des Kühlergitters durch eine geschlossene Kühlerschutzblende ermöglicht. Für das Thermomanagement innerhalb eines Elektromotors ist nämlich die kühle Luftzufuhr innerhalb der Unterbodenluft für den Akku, die Bremsen und den Elektromotor völlig ausreichend. Das frühere Kühlergitter an der Frontseite des Kraftfahrzeugs vor dem Motorraum kann somit nunmehr durch eine geschlossene Kühlerschutzblende verschlossen werden, die in einen Rahmen eingesetzt sein kann.

Diese Kühlerschutzblende bietet gestalterisch außerordentlich interessante Möglichkeiten, Designaspekte von dem Fahrzeug herauszuheben, weil diese im Rahmen der Erfindung genannte Frontfläche durch ihre hervorstehende Position besonders prominent sichtbar ist. Wünschenswert ist insbesondere eine sehr individuelle Ausgestaltung angepasst an den jeweiligen Fahrzeugtyp ohne große und aufwändige Umgestaltung der Produktionsanlage.

Besonders bevorzugt ist eine verchromte Ausgestaltung der Designstruktur, also der in Einbaulage aus der Außenfläche unterschiedlich vor allem hervorstehenden Designstruktur, wobei hiermit also eine dreidimensionale Struktur gemeint sein kann. Dabei ist es möglichst wünschenswert, dass auch beliebige dreidimensionale Strukturen in der Designerhebung ausgebildet sein können, insbesondere auch aneinander grenzende Flächen, die zwischen sich einen spitzen Winkel einschließen und dann zur Erzielung eines besonders wertigen Eindrucks verchromt sind oder mit einer metallischen Oberfläche versehen sind. Hierbei werden beim Stand der Technik heute häufig Heißprägefolien eingesetzt, die in einem Heißprägeverfahren auf die dreidimensionale Struktur bzw. auf eine Vorderfläche der Designstruktur aufgebracht werden. Dazu benötigt die Designstruktur jedoch eine herausragende Oberfläche mit einer bombierten, also abgerundeten Oberfläche, die zur Mitte der Oberfläche hin ansteigend gewölbt ist, damit der Heißprägestempel die Heißprägefolie auf diese Oberfläche aufbringen kann und möglicherweise zwischen der Oberfläche und der Heißprägefolie eingeschlossene Luft beim Aufdrücken und Festkleben zum Rand hin zwischen den beiden Fügepartnern hinausdrückt. Insofern ist es bislang nicht möglich, beliebige dreidimensionale Strukturen in der Designstruktur vorzusehen, die eine metallische Oberfläche aufweist, insbesondere wenn die Designerstruktur sehr klein ausgebildet ist oder auch mehrere Designstrukturen innerhalb oder an dem Flächenteil vorgesehen sein sollen.

Gattungsgemäße Vorrichtungen der genannten Art sind in der DE 10 2017 214 943 A1 sowie der DE 10 2013 018 993 A1 offenbart, die aber den Nachteil eines relativ komplexen Aufbaus aufweisen.

Gattungsfremder Stand der Technik ist bekannt aus DE 299 10 529 U1, DE 10 2007 057 934 A1, DE 10 2008 057 530 A1, EP 0 543 085 A1, DE 10 2010 035 632 B3 sowie JP 2006 160 136 A.

### Aufgabe

Ausgehend von dem eingangs genannten Stand der Technik und den damit verbundenen, zuvor geschilderten Nachteilen liegt der Erfindung somit die Aufgabe zugrunde, die eingangs genannten Nachteile zumindest teilweise zu vermeiden und ein externes Karosserieteil vorzusehen, das eine besonders variable Gestaltung der vor allem erhebenden Designstruktur bei gleichzeitig kostengünstiger Fertigung ermöglicht, und zwar insbesondere für kleinere Designstrukturen, von denen mehrere auf der Außenseite des externen Karosserieteil angeordnet sind.

### Erfindung

Erfindungsgemäß wird diese Aufgabe bereits durch die Merkmale der unabhängigen Ansprüche gelöst. Nicht zwingende, aber somit vorteilhafte Weiterentwicklungen sind in den Unteransprüchen wiedergegeben.

Erfindungsgemäß wird also die Ausbildung des Exterieur-Bauteils als zweiteiliges Bauteil vorgeschlagen, nämlich eines in Einbaulage verbaut in ein Kraftfahrzeug, insbesondere einen PKW, vorderes und auf der Außenfläche in Wagenfarbe vorzugsweise lackiertes Flächenteil mit einer, vorzugsweise jedoch mehrerer Designöffnungen. Ein Anlageteil ist ausgebildet mit mindestens einer Anlagefläche zur Anlage gegen die Rückseite des Flächenteils zumindest im um die Designöffnung herum und weist korrespondierend zu der oder den Designöffnungen eine Designstruktur auf, die von der Anlagefläche des Anlageteils als dreidimensionale Struktur absteht.

Die Designstruktur ist also eine klar definierte und abgegrenzte, dreidimensionale Geometrie erstreckend in Länge, Breite und Höhe, welche als Einsteckteil ausgebildet von der Rückseite des Flächenteils her in die Designöffnung eingeschoben wird, also in dieser sitzt und somit von einem Außenrand der Designöffnung umschlossen wird. Designöffnung und Designstruktur sind folglich komplementär ausgebildet und vorzugsweise so, dass zwischen diesen ein möglichst kleiner Spalt oder nahezu keiner existiert.

Die in Einbaulage gegeneinander anliegenden Fügeflächen von Designstruktur und Flächenteil können so ausgebildet sein, dass diese den Einbau vereinfachen, z.B. mit komplementären Auflaufschrägen, die beim Einschieben gegeneinander ableiten.

Die Designstruktur ist je nach der Höhe entweder als Designerhebung ausgestaltet, womit gemeint ist, dass die Vorderfläche oder die Außenfläche der Designstruktur in Einbaulage in das Flächenteil über die Außenfläche des Flächenteils hervorsteht, vorzugsweise mit einem Abstand von 2-5 mm.

Bei der Ausgestaltung einer Designstruktur mit etwas geringerer Höhe ist diese als Designvertiefung ausgebildet, sodass diese beim Einbau in die Designöffnung des Flächenteils gegenüber der Außenfläche des Flächenteils zurückspringt, vorzugsweise um ein bis 2 mm.

Da die Designstruktur vorzugsweise eine andere Farbe als das diese in Einbaulage aufnehmende, umgebende Flächenteil aufweist, kann diese aber auch von der Höhe der dreidimensionalen Struktur auf der Anlagefläche des Anlageteils so ausgebildet sein, dass die Vorderfläche der Designstruktur mit der Außenfläche bündig abschließt oder hier nur geometrische Ausgestaltungen vorgesehen sind. Möglich ist z.B. die Ausbildung des Anlageteils in einem andersfarbigen Kunststoff, anders lackiert ist oder mit einer metallischen Oberfläche versehen ist.

Vorzugsweise sind die Anlagefläche und die Designstruktur als einstückiges Kunststoffspritzgussteil ausgebildet.

In der abstraktesten Ausführungsform wird die Aufgabe bereits dadurch gelöst, dass das Flächenteil mit einer Außenfläche in einer ersten Farbe mindestens eine Designöffnung aufweist und dass mindestens ein zweites Anlageteil vorgesehen ist, welches in Einbaulage, also im zusammengebauten Zustand ausgebildet ist zum Anliegen an die Innenfläche des Flächenteils und die mindestens eine Designerstruktur in einer von der ersten Farbe abweichenden zweiten Farbe umfasst, die ihrerseits ausgebildet ist zum Hindurchstecken durch die Designöffnung und dann in Einbaulage über die Außenfläche übersteht, mit der Außenfläche abschließt oder gegenüber der Außenfläche zurückspringt.

Zudem sind mehrere Anlageteile mit darauf angeordneten Designstrukturen, die in Einbaulage einer jeweiligen Designöffnung zugeordnet sind, sowie eine Verbindungsstruktur zwischen den einzelnen Anlageteilen vorgesehen, welche eine gewisse Bewegung und somit Justage der Anlageteile im Verhältnis zueinander ermöglicht, um diese somit genau in der jeweiligen Designöffnung positionieren zu können.

Die mindestens eine Designöffnung innerhalb des Flächenteils bildet also quasi das Negativ der Designerhebung ab, ist meistens aber geringfügig größer ausgebildet als die Designerstruktur an dem Anlageteil, welches von hinten mit dem Flächenteil verbunden wird. In Einbaulage ragt die Designerhebung durch diese Designöffnung nach vorne und kann über die Außenfläche des Flächenteils über- oder vorstehen.

Die Außenfläche kann erfindungsgemäß somit als frei gestaltbare Designfläche fungieren. Das in Einbaulage innenseitig gelegene Anlageteil umfasst eine um die mindestens eine Designstruktur herum angeordnete Anlagefläche zur Anlage auf der Innenfläche des Flächenteils zumindest im Bereich der Designöffnung. Diese Anlagefläche des Anlageteils kann unterschiedlich groß ausgebildet sein. Wichtig ist allerdings, dass eine feste und unverlierbare Fixierung des Anlageteils an oder im Verhältnis zu dem Flächenteil realisiert wird. Das Anlageteil kann z.B. mit dem Flächenteil rastend verbunden, z.B. verclipst werden, aber auch verklebt oder in anderer Weise verbunden werden.

In Einbaulage steht nur die Designstruktur des Anlageteils also durch die Designöffnung hindurch und ragt bevorzugt nach vorne aus der Außenfläche des Flächenteils vor. Da aber das Flächenteil und das Anlageteil vollständig unabhängig voneinander gefertigt werden können, lässt sich das Anlageteil farblich und gestalterisch in der Oberfläche beliebig gestalten.

Üblicherweise ist das Flächenteil in der Farbe des Kraftfahrzeugs lackiert, wozu heute vorzugsweise Dreischichtsysteme eingesetzt werden, welche eine auf den Kunststoff oder das Kunststoffrohteil, also das Flächenteil aufgebrachte Grundierung, einen weiteren Basislack und einen abschließenden Decklack umfassen, um die für ein Exterieur-Bauteil geforderte Umweltstabilität in Bezug auf Steinschlag, Salze, Chemikalien, Witterung, UV-Beständigkeit und dergleichen in Abhängigkeit von den Vorgaben des jeweiligen Herstellers zu erfüllen.

Insbesondere ermöglicht diese Ausgestaltung auch das Aufbringen einer metallischen Oberfläche auf die der Innenfläche in Einbaulage zugewandte Vorderseite des Anlageteils. So kann z.B. eine aufgedampfte und besonders haltbare Chromoberfläche auf der Vorderseite des Anlageteils vorgesehen sein, die einen besonders hochwertigen Eindruck der Designerhebung realisiert und zudem besonders resistent gegen Umwelteinflüsse ist. Insofern ermöglicht die erfindungsgemäße Ausgestaltung ganz neue designtechnische Gestaltungen, die bislang nicht möglich waren, aber auch gleichzeitig eine besonders hohe Umweltstabilität gewährleisten.

Bevorzugt ist das Anlageteil ebenfalls als Kunststoffspritzgussteil ausgebildet. Anlageteil und Flächenteil können aus demselben Kunststoff ausgebildet sein. Besonders bevorzugte Kunststoffe sind ASA, ABS, PA, PC, PP, PMMA sowie Blends aus den genannten Kunststoffen. Vorzugsweise handelt es sich hierbei um die zum Zeitpunkt der Entwicklung der Erfindung besonders bevorzugten Kunststoffe zur Fertigung von Exterieur-Bauteilen, also Außenteilen von Kraftfahrzeugen, insbesondere Pkws, die eine hohe Zähigkeit, Festigkeit und Witterungsbeständigkeit aufweisen.

Für eine passgenaue und unverlierbare Fixierung des Flächenteils und des Anlageteils im Verhältnis zueinander umfasst das Anlageteil vorzugsweise eine Anlagefläche, die ausgebildet ist zur rückseitigen Anlage an die Innenfläche des Flächenteils zumindest um den Bereich der Designöffnung herum, aber möglicherweise auch in größeren Abschnitten, falls gewünscht sogar im Wesentlichen entlang der gesamten Innenfläche des Flächenteils entlang erstreckt.

Das Anlageteil bildet also eine mit dem in Einbaulage außenseitig gesehenen Flächenteil umfassende Baugruppe, die miteinander verbunden werden und somit ein zweiteiliges Karosserieteil bilden. In Einbaulage steht die mindestens eine Designstruktur aus der Anlagefläche hervor und ist so ausgebildet, dass in Einbaulage anliegend an der Innenseite des Flächenteils durch die Designöffnung über die Außenfläche des Flächenteils zumindest im Bereich der Designöffnung vorzugsweise hervorsteht.

Die Paarung der Bauteile ist so ausgebildet, dass in Einbaulage, also verbaut in das Kraftfahrzeug, nur die über die sich von der Außenfläche andere farblich gestaltete Designstruktur sichtbar ist und sich vorzugsweise erhebt und wobei der Rest wird von dem Flächenteil vollständig abgedeckt wird.

Bevorzugt können zur besonders genauen Fixierung von Flächenteil und von Anlageteil zwischen den beiden Bauteilen in Einbaulage wirkende Auflaufschrägen oder komplementäre Passungen ausgebildet sein, die eine besonders gute und passgenaue Montage der beiden Teile im Verhältnis zueinander auch für ungeübtes Personal ermöglichen. Bevorzugt sind diese Passungen oder Auflaufschrägen so ausgebildet, dass eine unkorrekte Anordnung des Anlageteils innerhalb des Flächenteils ausgeschlossen wird. Dieses kann z.B. durch Vorsprünge erfolgen, die in korrespondierende Öffnungen in der korrekten Ausrichtung eingreifen und in der unkorrekten Ausrichtung der beiden Teile im Verhältnis zueinander einen deutlich sichtbaren Abstand realisieren.

Bei der besonders bevorzugten Ausführungsform ist das Flächenteil als Blende, also ein in einen Rahmen, Rand oder in anderer Aufnahme einsetzbares Element ausgebildet. Ganz besonders bevorzugt ist die Ausbildung des externen Karosserieteils als Kühlerschutzblende, die eine besonders prominente Position am Fahrzeug einnimmt und durch die Neugestaltung ganz neue Gestaltungsmöglichkeiten ermöglicht.

So ist es bei Ausführungsformen möglich, dass das Anlageteil zumindest im Bereich der Designerhebung, aber auch für das gesamte Anlageteil eine metallische oder metallisierte Oberfläche aufweist, insbesondere eine verchromte, hochglänzende Oberfläche. Damit können Embleme, Logos und Insignien besonders wertig und prominent, gleichzeitig aber auch umweltresistent gestaltet werden.

Bei Ausführungsformen umfasst die Designstruktur zumindest an einem in Einbaulage über die Außenfläche bzw. Designfläche hervorstehenden Designerhebung zwei oder mehr aneinander angrenzende Flächen, die zwischen sich einen spitzen Winkel einschließen. Somit ist es erfindungsgemäß erstmalig auch bei kleinen Designs möglich, eine Art Dachgiebelgestaltung vorzusehen und diese auch mit einer metallischen Anmutung auszugestalten. Überhaupt kann jede geometrische Form, die im Spritzgussprozess abgebildet werden kann, an der Designerhebung verwirklicht werden.

Obwohl bislang die Erfindung anhand einer Designstruktur beschrieben wurde, liegt es auch im Rahmen der Erfindung, mehrere, insbesondere eine Vielzahl von relativ kleinen Designöffnungen und mehreren korrespondierenden Anlageteilen vorzusehen, z.B. mehrere Reihen von kleineren Designstrukturen neben- und untereinander, also auch die Anordnung in einer Art Matrix auf dem Flächenteil.

Besonders interessant ist die Ausgestaltung eines prominenten und größeren Logos innerhalb der Mitte des Flächenteils, z.B. des Logos eines Fahrzeugherstellers und sodann mehrere kleinere Ausgestaltungen dieses Logos in Form der Designerhebungen seitlich davon an dem Flächenteil. Mitunter ist es dabei auch möglich, die Designerhebung als ein reduziertes Logo auszugestalten, das auf den Kern des Logos beschränkt ist.

Das Anlageteil kann auch flächig ausgebildet sein, welches also als Fläche rückseitig an die Innenfläche des Flächenteils anliegt.

Beispielsweise kann die Verbindungsstruktur ein Angusssystem umfassen, also Verbindungsstreben zwischen den einzelnen Anlageteilen. Beispielsweise umfasst das Angusssystem stabartige Streben, die zwischen einzelnen und kleineren, den entsprechenden Designöffnungen in Einbaulage zugeordneten Anlageteilen ausgebildet sind, wobei die kleineren Anlageteile oder Anlageunterteile jeweils eine Designstruktur mit einer korrespondierenden Anlagefläche umfassen, die rückseitig in eine korrespondierende Designöffnung an dem Flächenteil in Einbaulage einsetzbar sind. Durch diese relativ bewegliche Verbindung der Anlageteile im Verhältnis zueinander können Spannungen zwischen den Bauteilen aufgrund von Wärmeausdehnung sowie Fertigungs- und Montagetoleranzen nahezu vollständig ausgeglichen werden.

Bevorzugt ist die Verbindungsstruktur elastisch ausgebildet, ermöglicht also einen gewissen Versatz der Anlageteile im Verhältnis zueinander bei der Montage an dem vorderseitigen Flächenteil.

Besonders bevorzugt erfolgt dieses durch eine leicht gebogene Ausgestaltung von die Anlageteile verbindenden Streben oder Stäben, also z.B. einer leicht im Verhältnis zur direkten Verbindung gebogenen Ausgestaltung der Stäbe, insbesondere gewölbt weg von der Fügefläche der beiden Fügepartner Flächenteil/Anlageteil zueinander.

Erfindungsgemäß weist das Anlageteil eine von der Außenfläche des Flächenteils abweichende Farbe auf, so dass sich das Anlageteil optisch deutlich von dem umgebenden Flächenteil abhebt.

Das Anlageteil kann z.B. aus einem Kunststoff mit einer anderen Farbe als das Flächenteil ausgebildet sein (mold-in-color). Möglich ist auch das Versehen des Anlageteils mit einer Farbe oder metallischen Oberfläche, z.B. einer aufgedampften Metalloberfläche. Besonders bevorzugt ist das Aufbringen einer metallischen Heißprägefolie zumindest auf der nach außen sichtbaren Designerhebung mit einem Heißprägeverfahren, was eine besonders wertig aussehende Chromoberfläche ermöglicht.

Ausführungsformen umfassen die Ausgestaltung eines zu jeder Designöffnung zugeordneten Anlageteils oder Anlageeinzelteils, welches eine Halteplatte zur rückseitigen Anlage an der Innenfläche des Flächenteils lediglich im Bereich jeder Designöffnung aufweist, und eine mit der Designöffnung korrespondierende Designstruktur bzw. Erhebungsstruktur auf dieser Halteplatte aufweist, welche in Einbaulage in der Designöffnung sitzt.

Weitere Ausführungsformen umfassen die Ausbildung des Anlageteils zumindest teilweise lichtleitend, also aus einem lichtleitenden Kunststoff, in den Licht eingekoppelt und über Totalreflektion zu gewünschten Austrittsstellen geleitet wird. Dieser so gebildete Lichtleiter kann ebenfalls oder teilweise spritzgegossen sein. Damit können also die Designerhebungen illuminiert werden, auch eine parallele Illumination mehrerer in einer Reihe angeordneter Designstrukturen ist damit möglich.

Bei einer alternativen Ausführungsform ist jedem Anlageteil oder Anlageeinzelteil ein einzelnes eigenes Leuchtmittel zugeordnet, z.B. in Form einer rückseitig einstrahlenden LED, welche das Anlageeinzelteil erleuchtet.

Bei einer alternativen Ausführungsform ist das mindestens eine Anlageteil als tiefgezogene Folie ausgebildet, welche aber nach dem Tiefziehen die erforderliche Eigensteifigkeit und Formstabilität aufweist. Dieses Tiefziehverfahren wird in verschiedenen Bereichen eingesetzt und geht üblicherweise so vonstatten, dass ein Kunststoffrohling auf eine Form aufgebracht wird, die eine Kavität aufweist, welche mit einem Unterdruck beaufschlagt werden kann. Beim Erhitzen der Folie, also des Kunststoffrohlings, wird die Folie in die Kavität eingezogen und durch Beaufschlagen mit dem Unterdruck genau auf die erforderliche Sollgeometrie gebracht. So lassen sich eigenstabile Folien in beliebigen Geometrien herstellen, wie dieses z.B. für Verpackungen, insbesondere hochwertige Verpackungen, wie Elektroverpackungen, Medizinverpackungen, häufig bezeichnet als Blister-Verpackungen, eingesetzt wird. Auch aus Kunststoff bestehende Formkörper, z.B. Einsätze für Schubladen, z.B. Besteckeinsätze, Becher oder dergleichen werden durch derartiges Tiefziehen von Kunststofffolien hergestellt. Der Kunststoffrohling weist dabei eine Wandstärke von 1 bis 2 mm, vorzugsweise 1,5 bis 2 mm auf.

Bei einem ferner offenbarten Herstellungsverfahren, ist es möglich, dass die Form zweiteilig ausgebildet ist mit zwei aufeinanderliegenden Formteilen, einem relativ unteren Formunterteil und einem relativ oberen Formunterteil, wobei die Tiefziehfolie zum Tiefziehen auf einer Oberfläche des oberen Flächenteils aufliegt und die Kavität durch Zusammenspiel einer oberen Teilkavität in dem Flächenteil und einer unteren Teilkavität in der unteren Form gebildet ist. Durch diese Ausgestaltung ist es möglich, dass nur das in Einbaulage und besonders prominente Vorderteil des tiefgezogenen Teils innerhalb des als Stahlkörper ausgebildeten Form gebildet werden muss, während das wesentlich günstigere Flächenteil einen Großteil der Kavität bildet, was die Werkzeugkosten für die Form erheblich reduziert.

Insofern wird ferner auch ein Herstellungsverfahren für zumindest ein Anlageteil offenbart, welches ausgebildet ist zur Verwendung mit einem externen Karosserieteil gemäß einem der vorhergehenden dieser betreffenden Ansprüche.

Verfahrensgemäß wird ein Kunststoffrohling oder eine Tiefziehfolie auf die Rückseite des Flächenteils zumindest um die Kavität herum aufgelegt und diese Tiefziehfolie oder Kunststofffolie wird sodann erwärmt, z.B. mittels Infrarotbestrahlung. Durch die Erwärmung zieht sich die Tiefziehfolie in die Kavität, wird also durch die gemeinsam in dem Werkzeug und dem Flächenteil ausgebildeten Kavität auf die entsprechende Form gebracht und liegt sogleich fest in der zumindest teilweise ausgebildeten Designöffnung innerhalb des Flächenteils an. Bevorzugt ist die Tiefziehfolie innenseitig mit der Rückseite des Flächenteils verklebt, zumindest im Bereich der Designöffnung und der Designerhebung.

Bei einer bevorzugten Weiterentwicklung kann innerhalb der Kavität ein Vakuum angelegt werden, so dass dieses also ausgebildet ist zum Aufbringen eines Vakuums auf die Designstruktur.

Bei einer Weiterentwicklung wird das fertig hergestellte und gegebenenfalls auch bereits auf der Außenseite bereits lackierte Flächenteil in die Spritzgussform gelegt, wobei dann das Flächenteil und die Spritzgussform gemeinsam eine Kavität zur Ausbildung der Designstruktur ausbilden, so dass also jedes Teil eine Teilkavität bildet, nämlich eine relativ untere Teilkavität, vorzugsweise ausgebildet in einer Stahlform, sowie eine darauf angeordnete obere Teilkavität, vorzugsweise gestaltet durch das Flächenteil.

Bei der bevorzugten Ausführungsform macht der Bereich innerhalb des Werkzeugs bzw. innerhalb der Spritzgussform nur einen sehr geringfügigen Teil der Designerhebung aus, insbesondere nur die vorderen 10-20 % der Höhe, wohingegen der Rest, der ohnehin von außen nicht sichtbar ist, innerhalb der Teilkavität des Flächenteils angeordnet ist.

In den Figuren werden identische oder ähnliche Elemente mit identischen Bezugszeichen versehen, soweit dieses zweckmäßig ist.

Bezugszeichenlinien sind Linien, die das Bezugszeichen mit dem betreffenden Teil verbinden. Ein Pfeil hingegen, der kein Teil berührt, bezieht sich auf eine gesamte Einheit, auf die er gerichtet ist.

Die Darstellungen in den Figuren sind im Übrigen nicht unbedingt maßstäblich. Zur Veranschaulichung von Details können bestimmte Bereiche übertrieben groß dargestellt sein. Darüber hinaus können die Zeichnungen plakativ vereinfacht sein und enthalten nicht jedes bei der praktischen Ausführung gegebenenfalls vorhandene Detail. Es zeigen:
- Figur 1: eine isometrische Frontansicht einer erfindungsgemäßen Kühlerschutzblende für einen PKW;
- Figur 2: einen vergrößerten Querschnitt eines Designelements;
- Figur 3: eine isometrische Frontansicht eines alternativ ausgebildeten Anlageteils;
- Figur 4: eine vergrößerte Seitenansicht entlang der Linie IV - IV gemäß Figur 3;
- Figur 5: ein schematisches Schnittbild einer ersten Ausführungsform einer Form vor der Herstellung eines Anlageteils mittels Tiefziehens;
- Figur 6: ein schematisches Schnittbild einer zweiten Ausführungsform einer Form nach der Herstellung eines Anlageteils mittels Tiefziehens; und
- Figur 7: eine schematische Darstellung eines in ein Anlageteil integrierten Lichtleiters.

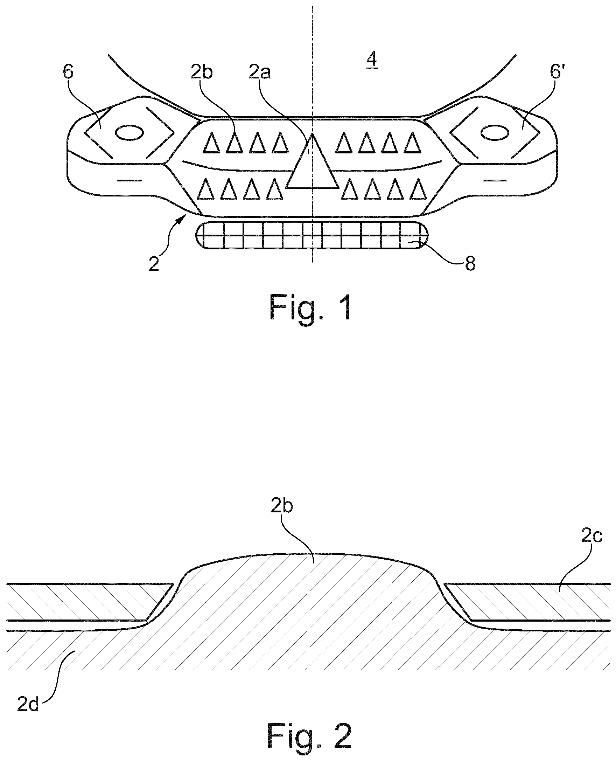

Figur 1 zeigt eine stilisierte isometrische Frontansicht eines Pkws mit einer erfindungsgemäßen Kühlerschutzblende 2, oberhalb der eine Motorabdeckung 4 sitzt und die beidseitig eingefasst ist von Frontleuchten 6,6'; unterhalb der Kühlerschutzblende 2 ist ein Lufteinlass 8 angeordnet.

Auf der Vorderseite der Kühlerschutzblende 2 ist zentral ein prominent großes Hauptherstellerlogo 2a angeordnet und daneben jeweils zu den Frontleuchten 6,6', auf der gekrümmten Vorderseite der Kühlerschutzblende 2 erstreckend in jeweils einer unteren und einer oberen Reihe vier Miniatur-Herstellerlogos 2b.

Figur 2 zeigt ein derartiges Miniatur-Herstellerlogo 2b vergrößert im Längsschnitt. In dem einbauseitig vorderseitig und von außen sichtbaren Flächenteil 2c ist eine Designöffnung ausgebildet, welche an die Geometrie und die Größe des Miniatur-Herstellerlogos 2b angepasst ist, so dass das auf einem hinteren Anlageteil 2d vorderseitig angeformte Miniatur-Herstellerlogo 2b durch diese Designöffnung hervortreten kann und prominent sichtbar ist. Konkret tritt hier aber nur die frontseitige Pyramidenstruktur des Miniatur- Herstellerlogos 2b über die Vorderfläche des vorderen und in Wagenfarbe lackierten Flächenteils 2c hinaus. Diese frontseitige Pyramidenstruktur mit drei in der mittigen Spitze zusammenlaufenden und hochstehenden Dreiecken ist wie das gesamte, in Einbaulage hinterseitige Anlageteil 2d mit einer metallischen Lackierung oder Oberfläche versehen. Somit wird also eine erhabene 3D-Kontur durch das Anlageteil bzw. der auf dieser angeordneten Designerhebung in Form des Miniatur-Herstellerlogos 2b realisiert. Zwischen dem vorderen Flächenteil 2c und dem hinteren Anlageteil 2d ist also um die Designerhebung 2e herum erstreckend eine umlaufende Fuge ausgebildet. Bei einer Weiterentwicklung kann in dieser umlaufenden Fuge zusätzlich ein Lichtelement angeordnet sein, um eine besonders anmutende Anstrahlung der Designerhebungen zu realisieren.

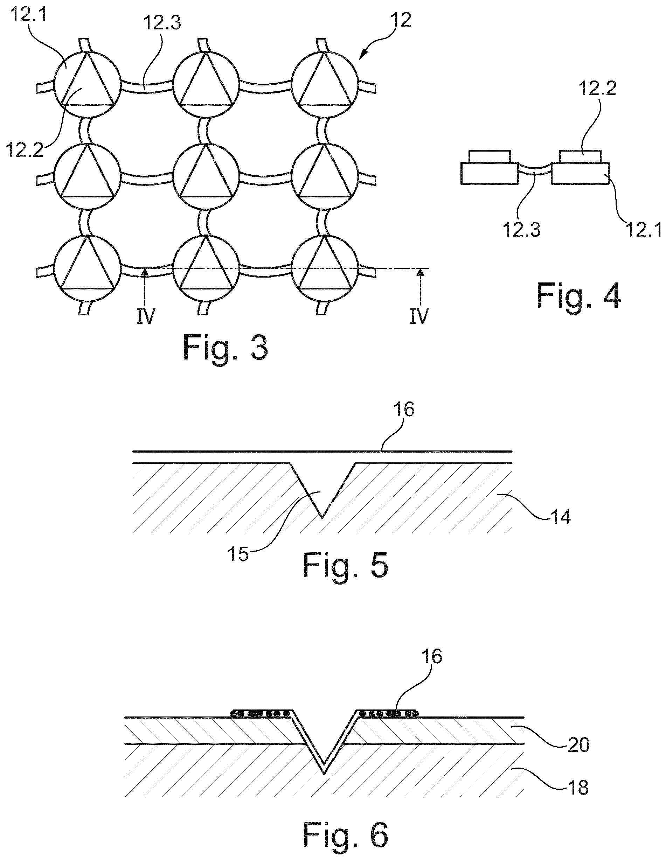

Figur 3 zeigt eine alternative Ausführungsform eines Anlageteils 12, umfassend neun Anlageeinzelteile, die jeweils eine flächige Anlagefläche 12.1 und die auf der Vorderseite dieser Anlageflächen 12.1 jeweils eine pyramidenförmige Designerhebung 12.2 aufweisen. Die Anlageeinzelteile 12.1 sind über stabförmige Verbindungsstreben 12.3 miteinander verbunden zur Bildung eines Angusssystems, welches gestalterisch ausgebildet ist zur rückseitigen Anlage und zur Befestigung an dem vorderen Flächenteil, hier nicht dargestellt, aber ähnlich wie in Figur 2.

Die Figur 4 zeigt eine vergrößerte Ansicht von zwei derartiger Anlageeinzelteile 12.1 entlang der Linie IV - IV gemäß Figur 3, die über eine Verbindungsstrebe 12.4 miteinander verbunden sind. Erkennbar ist hier, dass die Verbindungsstrebe von der Vorderseite weg, also nach hinten entgegen der Seite, auf der die Designerhebungen angeordnet sind, nach hinten gewölbt sind, um Fertigungstoleranzen ausgleichen zu können.

Figur 5 zeigt eine schematische Seitenansicht einer Herstellungsanordnung zur Erläuterung des Herstellungsverfahrens eines Anlageteils im Tiefziehverfahren.

Unterseitig ist eine aus Stahl bestehende Form 14 vorgesehen, in der eine spitz nach unten zulaufende Kavität 14.1 ausgeformt ist. Diese Kavität 14.1 entspricht im vorliegenden Fall der Ausgestaltung der Designerhebung. Flächig aufliegend auf einer Auflagefläche der Form 14 ist eine tiefziehbare Tiefziehfolie 16. Wird diese Tiefziehfolie 16 erwärmt, sinkt diese in die Kavität 14.1 ein und passt sich an deren Geometrie an. Dieser Prozess kann beschleunigt und/oder verbessert werden durch Anlegen eines Vakuums innerhalb der Kavität 14.1.

Nicht dargestellt ist hier, wie auch die Verbindungsstreben in gleicher Weise entsprechend in der Form 14 ausgebildet werden.

Figur 6 zeigt eine schematische Seitenansicht einer alternativen Anordnung zur Herstellung eines Anlageteils im Tiefziehverfahren mit einer zweiteiligen Form 18. Bei dieser Ausgestaltung ist ein fertiges Flächenteil 20 mit einer Designöffnung auf der Form 18 aufgelegt. Das Flächenteil 18 mit der Designöffnung und die Form 20 bilden zusammen die Kavität für die Designerhebung, wobei in der Form nur die unteren 10-20 % der Designerhebung ausgebildet sind, der wesentliche Teil also innerhalb der durch das Flächenteil gebildeten Teilkavität realisiert ist, die aber für das endgültige Aussehen von untergeordneter Bedeutung ist, weil dieser Teil der Designerhebung ohnehin nicht nach außen sichtbar ist.

Insofern muss nur der nach außen hervorstehende und somit sichtbare Teil der Designerhebung durch die besonders hochwertige und stabile Form 18 mit der in dieser ausgebildeten hier unteren Teilkavität ausgebildet sein.

In der Figur 6 ist die Tiefziehfolie 16 nach dem Tiefziehvorgang dargestellt, in welchem also die Tiefziehfolie 16 erwärmt wurde und somit innerhalb der Kavität liegt. Zusätzlich kann zwischen den gegeneinander anliegenden Anlageflächen zwischen der Tiefziehfolie 16 und der Rückseite des Flächenteils ein Kleber vorgesehen sein, besonders bevorzugt ist dieser Kleber wärmeaktiviert.

Diese Form 18 umfasst ein oberes Formoberteil 18.1, welches die Auflagefläche für die Tiefziehfolie 20 bildet und mit dem oberen Abschnitt einer wiederum spitz nach unten zulaufenden Kavität ausgebildet ist. Dieses Formoberteil 18.1 kann gebildet sein durch das Flächenteil oder ein getrenntes Formteil. Die besonders designrelevante und beanspruchte Spitze der späteren Designerhebung ist in dem Formunterteil 18.2 ausgebildet, welches aus einem hochwertigen Stahl gefertigt ist. Das Formoberteil 18.1 kann hingegen aus einem deutlich kostengünstigeren Stahl gefertigt sein, weil diese Flanken für den Betrachter ohnehin nicht sichtbar sind, weil sie in Einbaulage von den Seiten der Designöffnung in dem vorderen Flächenteil eingefasst sind oder eben auch einfach aus dem Flächenteil.

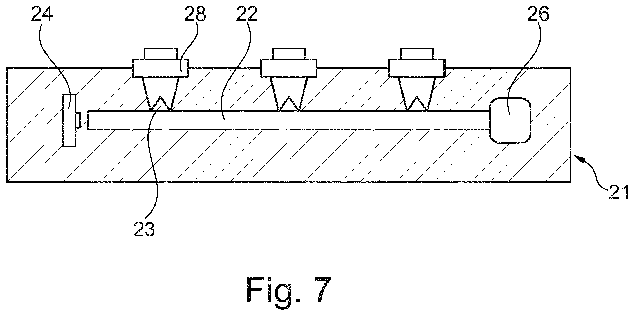

Figur 7 zeigt den schematischen Aufbau einer zur Ausleuchtung einer Designstruktur ausgebildeten Lichtleiteranordnung, welche in den Herstellprozess, also den Spritzgussprozess zur Herstellung des Anlageteils 21 integriert ist. Das Anlageteil 21 umschließt einen spritzgegossenen, also in den Spritzgussprozess integrierten Lichtleiter 22, in den an einem Ende stirnseitig über eine LED-Platine 24 ein Lichtstrom eingekoppelt wird. Dieser Lichtstrom breitet sich innerhalb dieses Lichtleiters 22 aufgrund der Totalreflexion aus. An dem der LED-Platine 24 gegenüberliegenden Ende ist der Lichtleiter 22 mit einer Abschlusskappe 26 gegen Streulicht versehen. An vordefinierten Stellen sind auf einer Seite des Lichtleiters 22 Auskoppel-Geometrien 23 angeformt oder in den Lichtleiter 22 eingebracht, welche den Lichtstrom aus dem Lichtleiter 22 austreten lassen, so dass dieser durch einen Lichtkanal auf die Hinterseite auf die schematisch dargestellten, lichtdurchlässigen Designstrukturen 28 auftreffen lässt und diese somit auf der Vorderseite illuminiert.

### Bezugszeichenliste

- 2: Kühlerschutzblende
- 2a: Haupthersteller-Logo
- 2b: Miniatur-Herstellerlogo
- 2c: Flächenteil
- 2d: Anlageteil
- 2e: Designstruktur
- 4: Motorabdeckung
- 6, 6': Frontleuchte
- 8: Lufteinlass
- 10: Anlageteil
- 10.1: Designstruktur
- 12: Anlageteil
- 12.1: Anlagefläche
- 12.3: Designstruktur
- 12.4: Verbindungsstrebe
- 14: Form
- 15: Kavität
- 16: Tiefziehfolie
- 18: Form
- 18.1: Formoberteil
- 18.2: Formunterteil
- 20: Tiefziehfolie
- 21: Anlageteil
- 22: Lichtleiter
- 23: Auskoppelgeometrie
- 24: LED-Platine
- 26: Abschlusskappe
- 28: Designstrukturelement

## Patentansprüche

1. Externes Karosserieteil, ausgebildet zum Einbau in eine Aufnahme an einem Kraftfahrzeug oder zum direkten Verbinden mit dem Kraftfahrzeug, mit
einem flächigen Flächenteil (2c), welches eine in Einbaulage nach außen gerichtete Außenfläche, eine dieser gegenüberliegende Innenfläche sowie einen dieses begrenzenden äußeren Flächenrand umfasst,
wobei mindestens eine Designstruktur vorgesehen ist,
wobei das Flächenteil als Kunststoffspritzgussteil ausgebildet ist,
und wobei zumindest die Außenfläche eine erste Farbe aufweist,
dass das Flächenteil (2c) mindestens eine Designöffnung zur Bildung eines inneren Designrands aufweist
und dass mindestens ein zweites Anlageteil (2d; 12) vorgesehen ist, welches ausgebildet ist zum Anliegen an die Innenfläche des Flächenteils (2c) und die mindestens eine Designstruktur umfasst,
dass das Anlageteil (2d; 129 ausgebildet ist zum Einstecken in die Designöffnung in Einbaulage und
dass zumindest die Designstruktur eine von der Außenfläche abweichende Farbe aufweist,
**DADURCH GEKENNZEICHNET,**
**dass** das Flächenteil (2c) mehrere Designöffnungen und das Anlageteil (2d; 12) mehrere mit diesen Designöffnungen korrespondierende Anlegeteile (12) mit Anlageflächen (12.1) und Designstrukturen (12.2) umfasst.

2. Externes Karosserieteil nach Anspruch 1 , **DADURCH GEKENNZEICHNET,**
**dass** die Designstruktur als über die Außenfläche vorstehende Designerhebung, als gegenüber der Außenfläche zurückspringende Designvertiefung oder als flächig mit der Außenfläche abschließende Designfläche ausgebildet ist.

3. Externes Karosserieteil nach Anspruch 1 oder 2, **DADURCH GEKENNZEICHNET,**
**dass** das Anlageteil (2d; 12) eine Anlagefläche ausgebildet zur Anlage an die Innenfläche zumindest im Bereich der Designöffnung umfasst,
und **dass** die Designstruktur aus der Anlagefläche hervorsteht und so ausgebildet ist, dass es in Einbaulage anliegend an der Innenseite des Flächenteils (2c) in der Designöffnung sitzt.

4. Externes Karosserieteil nach einem der vorhergehenden Ansprüche, **DADURCH GEKENNZEICHNET,**
**dass** das Flächenteil (2c) als Blende, insbesondere als Kühlerschutzblende (2) ausgebildet ist.

5. Externes Karosserieteil nach einem der vorhergehenden Ansprüche, **DADURCH GEKENNZEICHNET,**
**dass** das Anlageteil eine Kontrastfarbe gegenüber der Außenfläche des Flächenteils aufweist, z.B. als eingefärbter Kunststoff (Mold-in-Color) ausgebildet ist.

6. Externes Karosserieteil nach einem der vorhergehenden Ansprüche, **DADURCH GEKENNZEICHNET,**
**dass** die Designstruktur (2e) zumindest an einem in Einbaulage über die Außenfläche hervorstehenden Vorstehabschnitt zwei aneinander angrenzende Flächen umfasst, die einen spitzen Winkel zwischen sich einschließen.

7. Externes Karosserieteil nach einem der vorhergehenden Ansprüche, **DADURCH GEKENNZEICHNET,**
**dass** das Anlageteil ein Angusssystem mit Verbindungsstreben (12.4) zwischen den mehreren Anlagenteilen (12) umfasst,
und **dass** die Verbindungsstreben (12.4) ausgebildet sind, um einen Relativversatz den mehreren Anlageteilen ermöglicht.

8. Externes Karosserieteil nach Anspruch 7, **DADURCH GEKENNZEICHNET,**
**dass** die Verbindungsstreben (12.4) zum Toleranzausgleich elastisch oder flexibel ausgebildet sind.

9. Externes Karosserieteil nach Anspruch 8, **DADURCH GEKENNZEICHNET,**
**dass** die Verbindungsstreben (12.4) zum Toleranzausgleich bogenförmig gekrümmt sind.

10. Externes Karosserieteil nach einem der vorhergehenden Ansprüche, **DADURCH GEKENNZEICHNET,**
**dass** das Anlageteil (2d; 12) zumindest teilweise lichtleitend ausgebildet ist.

## Claims

1. External body part designed for installation in a receptacle on a motor vehicle or for direct connection to the motor vehicle, with
a flat surface part (2c) which comprises an outer surface facing outwards in the installation position, an inner surface opposite this, and an outer surface edge delimiting this,
wherein at least one design structure is provided,
wherein the surface part is designed as a plastic injection molded part,
and wherein at least the outer surface has a first color,
in that the surface part (2c) has at least one design opening for forming an inner design edge
and that at least a second abutment part (2d; 12) is provided, which is designed to bear against the inner surface of the surface part (2c) and comprises the at least one design structure,
that the component part (2d; 12) is designed to engage in the design opening in the installation position, and
that at least the design structure has a color that differs from the outer surface,
**CHARACTERIZED IN THAT**
that the surface part (2c) comprises several design openings and the abutment part (2d; 12) comprises several abutment parts (12) corresponding to these design openings with contact surfaces (12.1) and design structures (12.2).

2. External body part according to claim 1, **CHARACTERIZED IN THAT**
that the design structure is formed as a design elevation protruding from the outer surface, as a design recess recessed from the outer surface, or as a design surface flush with the outer surface.

3. External body part according to claim 1 or 2, **CHARACTERIZED IN THAT**
**in that** the abutment part (2d; 12) comprises an abutment surface formed for abutment against the inner surface at least in the region of the design opening,
and that the design structure protrudes from the contact surface and is designed such that, in the installed position,
it rests against the inside of the surface part (2c) in the design opening.

4. External body part according to one of the preceding claims, **CHARACTERIZED IN THAT**
**in that** the surface part (2c) is designed as a cover, in particular as a radiator cover (2).

5. External body part according to one of the preceding claims, **CHARACTERIZED IN THAT**
**in that** the abutment part comprises a contrasting color to the outer surface of the surface part, e.g. is formed as molded-in-color plastic.

6. External body part according to one of the preceding claims, **CHARACTERIZED IN THAT**
**in that** the design structure (2e) at least on a protruding section protruding above the outer surface comprises two adjacent surfaces that enclose an acute angle between them.

7. External body part according to one of the preceding claims, **CHARACTERIZED IN THAT**
that the abutment part comprises a sprue system with connecting struts (12.4) between the plurality of abutment parts (12),
and that the connecting struts (12.4) are designed to allow relative displacement of the plurality of system parts.

8. External body part according to claim 7, **CHARACTERIZED in that** the connecting struts (12.4) are designed to be elastic or flexible in order to compensate for tolerances.

9. External body part according to claim 8, THEREBY THAT
that the connecting struts (12.4) are curved in an arc shape to compensate for tolerances.

10. External body part according to one of the preceding claims, **CHARACTERIZED IN THAT**
that the abutment part (2d; 12) is at least partially light-conducting.

## Revendications

1. Pièce de carrosserie externe, réalisée pour être montée dans un logement au niveau d'un véhicule automobile ou pour être reliée directement au véhicule automobile, comprenant
une partie surfacique plane (2c) qui, en position de montage, présente une surface extérieure tournée vers l'extérieur, une surface intérieure opposée à celle-ci ainsi qu'un bord de surface extérieur la délimitant,
dans laquelle
il est prévu au moins une structure de conception,
la partie plane est réalisée comme une pièce moulée par injection en matière plastique, et
au moins la surface extérieure présente une première couleur,
la partie plane (2c) présente au moins une ouverture de conception pour former un bord de conception intérieur, et
il est prévu au moins une deuxième partie d'appui (2d ; 12) qui est réalisée pour s'appuyer contre la surface intérieure de la partie plane (2c) et qui comprend au moins une structure de conception,
la partie d'appui (2d ; 12) est réalisée pour être insérée dans l'ouverture de conception en position de montage, et
au moins la structure de conception présente une couleur différente de celle de la surface extérieure,
**caractérisée en ce que**
la partie plane (2c) présente plusieurs ouvertures de conception, et la partie d'appui (2d ; 12) comprend plusieurs parties d'application (12) correspondant à ces ouvertures de conception et présentant des surfaces d'appui (12.1) et des structures de conception (12.2).

2. Pièce de carrosserie externe selon la revendication 1,
**caractérisée en ce que**
la structure de conception est réalisée sous la forme d'un relief de conception dépassant de la surface extérieure, d'un renfoncement de conception en retrait par rapport à la surface extérieure ou d'une surface de conception se terminant de façon plane au niveau de la surface extérieure.

3. Pièce de carrosserie externe selon la revendication 1 ou 2,
**caractérisée en ce que**
la partie d'appui (2d ; 12) comprend une surface d'appui réalisée pour s'appuyer contre la surface intérieure au moins dans la zone de l'ouverture de conception, et
**en ce que** la structure de conception dépasse de la surface d'appui et est réalisée de manière à reposer en position de montage contre la face intérieure de la partie plane (2c), dans l'ouverture de conception.

4. Pièce de carrosserie externe selon l'une des revendications précédentes, **caractérisée en ce que**
la partie plane (2c) est réalisée sous la forme d'un cache, en particulier sous la forme d'un cache de radiateur (2).

5. Pièce de carrosserie externe selon l'une des revendications précédentes, **caractérisée en ce que**
la partie d'appui présente une couleur contrastante par rapport à la surface extérieure de la partie plane, par exemple sous la forme d'une matière plastique colorée (Mold-in-Color).

6. Pièce de carrosserie externe selon l'une des revendications précédentes, **caractérisée en ce que**
la structure de conception (2e) comprend, au moins au niveau d'une partie saillante dépassant de la surface extérieure en position de montage, deux surfaces adjacentes qui forment entre elles un angle aigu.

7. Pièce de carrosserie externe selon l'une des revendications précédentes, **caractérisée en ce que**
la partie d'appui comprend un système d'injection présentant des entretoises de liaison (12.4) entre les multiples parties d'appui (12), et
**en ce que** les entretoises de liaison (12.4) sont réalisées pour permettre un décalage relatif entre les multiples parties d'appui.

8. Pièce de carrosserie externe selon la revendication 7,
**caractérisée en ce que**
les entretoises de liaison (12.4) sont réalisées de manière élastique ou flexible pour compenser les tolérances.

9. Pièce de carrosserie externe selon la revendication 8,
**caractérisée en ce que**
les entretoises de liaison (12.4) sont courbées en forme d'arc pour compenser les tolérances.

10. Pièce de carrosserie externe selon l'une des revendications précédentes, **caractérisée en ce que**
la partie d'appui (2d ; 12) est réalisée au moins en partie de manière à conduire la lumière.
